# FASCICULE DE BREVET EUROPEEN

(11) **EP 0 764 503 B1**
(45) Date de publication et mention de la délivrance du brevet: **25.11.1998**
(21) Numéro de dépôt: 96402012.7
(22) Date de dépôt: 24.09.1996
(51) Int. Cl.: B25J 9/14, B25J 15/02, A01G 9/10, B25B 7/12

(54) **Pince de préhension à manoeuvre par dépression**
Unterdruckgreifer
Low-pressure gripper

(30) Priorité: 25.09.1995 FR 9511219
(43) Date de publication de la demande: 26.03.1997
(73) Titulaire: GERPLANT AUTOMATION, F-76410 Cléon (FR)
(72) Inventeur: Germaine, Michel, 76350 Oissel (FR)
(74) Mandataire: Casalonga, Axel

(56) Documents cités:
- DE-A- 3 038 302
- DE-A- 3 129 884
- DE-A- 4 134 478
- FR-A- 2 376 726
- FR-A- 2 468 704
- FR-A- 2 614 499
- GB-A- 898 032
- US-A- 3 253 327
- PATENT ABSTRACTS OF JAPAN vol. 15, no. 247 (P-1219), 25 Juin 1991 & JP-A-03 078171 (NEC), 3 Avril 1991,
- DATABASE WPI Section PQ, Week 50 27 Janvier 1982 Derwent Publications Ltd., London, GB; Class P,Page 62, AN 81-M8878D XP002005702 & SU-A-812 568 (SEVAST INSTR CONS) , 20 Mars 1981

## Description

La présente invention se rapporte à une pince de préhension pour la transplantation de plants en mottes en horticulture, comprenant au moins deux éléments de préhension opposées montés en porte-à-faux sur un support et des moyens de manoeuvre à fluide pour agir sur les éléments de préhension de manière à faire passer leurs extrémités libres d'une position écartée à une position rapprochée, et inversement.

Il est connu, par exemple par le brevet FR 2 614 499, de saisir des objets fragiles tels que des plants en mottes en vue de la transplantation en horticulture, à l'aide d'une pince comprenant des éléments de préhension en forme de lames opposées qui peuvent être écartées et rapprochées l'une de l'autre à l'aide d'un moyen de manoeuvre tel qu'un vérin pneumatique monté verticalement sur un support. Le mouvement de rapprochement et d'écartement des lames fait intervenir des moyens de guidage qui sont solidaires du support du vérin, et nécessite une conformation particulière des lames pour leur permettre de coopérer avec ces moyens de guidage en vue d'obtenir le mouvement de rapprochement et d'écartement dans le sens horizontal des extrémités libres des lames en réponse au mouvement vertical du vérin de manoeuvre.

Une autre pince de préhension révélée par la demande de brevet FR 2685852 et destinée également plus particulièrement à la transplantation de plants en mottes comprend des éléments de préhension opposés en forme de lames élastiques fixées à un support de telle manière que leurs extrémités libres puissent être écartées l'une de l'autre, à l'encontre de l'élasticité des lames, par un organe d'écartement mobile entre les lames, et que les extrémités libres puissent être rapprochées l'une de l'autre par la seule élasticité des lames, lors du mouvement de retrait de l'organe d'écartement.

Ces deux pinces de préhension donnent de bons résultats en ce qui concerne la préhension, notamment d'objets fragiles, mais présentent l'inconvénient de nécessiter, notamment lorsqu'elles sont utilisée pour la transplantation, un adaptation précise des pinces dans leur ensemble, et en particulier de la forme de lames et des éléments de support, de guidage et de manoeuvre des lames, à la taille et la forme des objets à saisir, par exemple des plants en mottes ainsi que des alvéoles dont sont extraites les mottes à transplanter. Cette adaptation qui exige un personnel spécialisé est d'un coût relativement élevé, en particulier lorsqu'elle doit être effectuée sur des machines de transplantation comprenant un grand nombre de pinces.

De plus, l'encombrement et le poids de ces pinces connues sont relativement importants, notamment en raison de la présence des éléments de support, de guidage et de manoeuvre de ces pinces.

Enfin, ces pinces connues ne permettent pas une modulation simple de l'effet de serrage, ce qui serait particulièrement désirable en horticulture pour la préhension des plants en mottes.

D'autres pinces révélées par exemple par les demandes de brevets FR-A-2 635 637 et EP-A-0 323 674 présentent les mêmes inconvénients, les problèmes d'encombrement se manifestant d'une manière particulièrement nette pour la pince suivant ce dernier document.

La présente invention vise à réaliser une pince de préhension qui se distingue des pinces connues par une structure simple et une grande fiabilité, une possibilité d'adaptation simple à la taille et la forme des objets à saisir, ainsi que par un encombrement particulièrement faible, permettant ainsi, par exemple, de placer plusieurs pinces très près les unes des autres, comme cela peut être désirable notamment sur des machines de transplantation. L'invention vise par ailleurs une pince de préhension permettant une modulation simple et rapide de l'effet de serrage.

La pince de préhension objet de l'invention pour la transplantation de plants en mottes comprend au moins deux éléments de préhension opposés montés en porte-à-faux sur un support et des moyens de manoeuvre à fluide pour agir sur les éléments de préhension en vue de rapprocher et d'écarter leurs extrémités libres. Les moyens de manoeuvre sont constitués par un actionneur à dépression disposé entre et agissant directement sur les éléments de préhension, entre l'emplacement de montage de ces derniers sur le support et leurs extrémités libres, de telle manière que lorsqu'il est mis sous dépression, il agisse sur les éléments de préhension dans le sens d'un rapprochement des extrémités libres des éléments de préhension à l'encontre d'un effet de rappel élastique, en vue de la fermeture de la pince pour saisir un plant, et lorsqu'il n'est pas sous dépression, il permette aux extrémités libres des éléments de préhension de s'écarter par effet de rappel élastique, en vue de l'ouverture de la pince et pour relâcher un plant.

Par la disposition d'un actionneur à dépression entre les éléments de préhension et leur manoeuvre directe par cet actionneur, il est possible de supprimer tous les organes de support, de guidage et de manoeuvre qui sont nécessaires sur les pinces connues et en augmentent l'encombrement. La manoeuvre directe des éléments de préhension de la pince par l'actionneur à dépression permet de donner à ces éléments de préhension une forme particulièrement simple, qui est uniquement liée à la forme de l'objet à saisir, alors que sur les pinces connues, les éléments de préhension doivent présenter des conformations particulières pour permettre leur coopération mécanique avec des éléments de guidage ou de manoeuvre intervenant lors de l'ouverture et la fermeture de la pince. L'actionneur à dépression est un actionneur à simple effet, donc de structure et de commande simples.

Bien qu'il soit possible, dans le cadre de l'invention, d'utiliser n'importe quel type d'actionneur, ce dernier peut être constitué, suivant un mode de réalisation préféré, par un actionneur du type soufflet, de très faible encombrement, dont les deux extrémités sont reliées aux deux éléments de préhension.

Un tel actionneur en forme de soufflet peut être relié par tout moyen approprié aux éléments de préhension, mais suivant un mode de réalisation préféré, la pince comporte des éléments de préhension en forme de lames opposées par leurs faces plates et l'actionneur présente la forme d'un soufflet dont les deux extrémités sont fixées aux faces intérieures des lames plates. Cette fixation peut se faire par exemple par collage des extrémités du soufflet sur la face intérieure des lames, ou sur des couvercles fixés aux lames ou également par une fixation mécanique, par exemple un clipsage ou boutonnage des deux extrémités du soufflet sur des organes d'accrochage en forme de "boutons" rapportés par exemple par soudage sur les lames.

L'effet de rappel élastique pour l'ouverture de la pince peut être produit de diverses manières. Ainsi, au moins l'un des éléments de préhension, dans le cas où cet élément est élastique en flexion et est fixé rigidement en porte-à-faux au support, peut au moins participer, par son élasticité, à l'ouverture de la pince. Par ailleurs, un ressort de rappel intercalé entre les éléments de préhension peut au moins participer à l'ouverture de la pince. De plus, le soufflet, lorsqu'il est élastique, peut également au moins participer à l'ouverture de la pince. En cas d'utilisation d'un ressort séparé ou de l'élasticité du soufflet pour l'ouverture de la pince, il est possible d'articuler les éléments de préhension ou l'un au moins de ces éléments sur le support.

En se référant aux dessins schématiques annexés, on va décrire ci-après deux modes de réalisation illustratifs et non limitatifs d'une pince conforme à l'invention; sur les dessins:
la figure 1 est une vue de face d'une pince conforme à l'invention, en position ouverte;
la figure 2 est une vue de face de la pince de la figure 1, en position fermée;
la figure 3 est une vue de côté de la pince des figures 1 et 2;
la figure 4 est une coupe d'un mode de réalisation d'un actionneur en forme de soufflet pour une pince suivant les figures 1 à 3;
la figure 5 représente un autre mode de réalisation d'un actionneur et son mode de liaison aux branches de la pince.

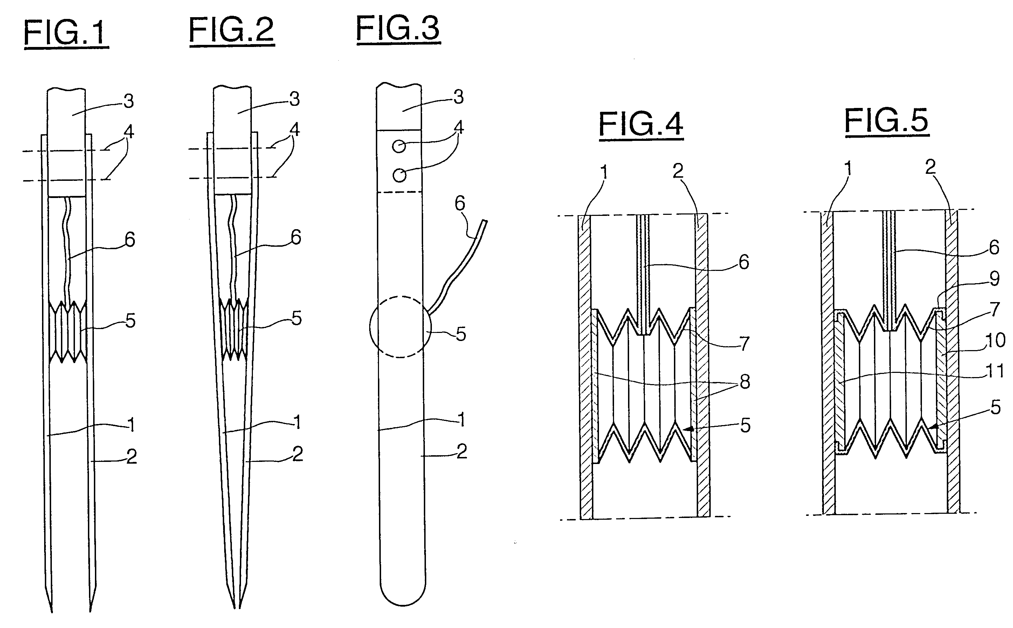

La pince telle qu'illustrée par les figures 1 à 3 peut être utilisée par exemple pour la transplantation de plants en mottes, comme décrit plus en détail par exemple dans le brevet français n° 2 614 499 et la demande de brevet français n° 2 685 852. La pince comprend deux branches 1 et 2 fixées par leurs extrémités supérieures à un support 3, par exemple à l'aide de moyens de fixation 4 tels que des vis. Les branches 1 et 2 sont constituées par des lames, par exemple en acier ou en matière plastique élastique, rectilignes et sont fixées en porte-à-faux au support 3 de manière qu'elles soient disposées parallèlement et à distance l'une de l'autre, en étant opposées par leurs grands côtés, tel que cela ressort clairement des figures 1 et 3. A leurs extrémités libres, les lames 1 et 2 sont effilées (voir figure 1) et arrondies (voir figure 3).

Un actionneur à fluide 5 qui est réalisé sous la forme d'un soufflet et qui sera décrit plus en détail avec référence à la figure 4 est disposé entre les deux lames 1 et 2, chacune de ses deux extrémités étant fixée à l'une des lames 1, 2. Par un tuyau 6, l'espace intérieur du soufflet 5 peut être mis en communication avec une source de dépression, qui peut être de préférence un venturi alimenté en air comprimé, de préférence à un débit variable.

Sous l'effet de la dépression établie à l'intérieur du soufflet 5, ce dernier se contracte et, comme le montre la figure 2, rapproche l'une de l'autre les deux lames 1 et 2, en les faisant fléchir élastiquement dans la zone comprise entre le soufflet 5 et le support 3 auquel les lames 1 et 2 sont fixées rigidement.

Il est donc possible, en engageant les lames 1 et 2 de la pince ouverte selon la figure 1 dans une motte ou à cheval sur une motte, et en amenant ensuite la pince à la position de fermeture selon la figure 2, par établissement d'une dépression dans le soufflet 5, de saisir la motte et, par déplacement de la pince, de transférer la motte avec la pince.

Selon la figure 4 qui est une coupe axiale du soufflet 5, le tuyau 6 est réalisé d'une seule pièce avec le corps 7 du soufflet, par moulage en caoutchouc, caoutchouc de silicone, élastomère naturel ou synthétique etc., le corps 7 étant obturé à ses deux extrémités par des couvercles 8 fixés par exemple par collage ou par soudage. Ce soufflet 5 peut être fixé aux lames 1 et 2 par exemple par soudage des couvercles 8 sur les faces intérieures des lames 1 et 2.

Dans le mode de réalisation suivant la figure 5, le corps 7 du soufflet 5 est ouvert à chaque extrémité et comporte ici un rebord intérieur 9 grâce auquel le soufflet 5 peut être fixé par clipsage ou boutonnage sur deux boutons 10, 11 fixés intérieurement sur les deux lames 1 et 2, par exemple par soudage. L'avantage de ce mode de réalisation consiste par le fait que la fabrication du soufflet 5 est simplifiée et que sa fixation aux lames 1 et 2 est instantanée (de même que son démontage des lames).

Il y a lieu de remarquer que les modes de réalisation représentés et décrits n'ont été donnés qu'à titre d'exemples illustratifs et non limitatifs et que de nombreuses modifications et variantes sont possibles dans le cadre de l'invention.

Ainsi, la pince pourrait comporter plus de deux lames ou éléments de préhension ayant des formes autres que des lames. La pince pourrait ainsi comporter par exemple trois éléments de préhension disposés en triangle et manoeuvrés par un actionneur unique, ou quatre éléments de préhension disposés au carré et manoeuvrés par un unique actionneur, ou par deux actionneurs à fluide agissant suivant des directions croisées.

Il est également possible de prévoir, par exemple, deux actionneurs superposés entre deux lames opposées, ce qui permet de conserver aux extrémités libres des lames leur orientation, par exemple leurs positions parallèles.

L'actionneur pourrait également présenter par exemple la forme d'un vérin plutôt que d'un soufflet, bien que ce dernier mode de réalisation soit plus simple et plus compact.

Il y a également lieu de noter que l'actionneur à dépression peut être commandé d'une manière particulièrement simple et avec une dépression variable, en vue d'une modulation de l'effet de serrage, dans le cas où la dépression est produite à l'aide d'un venturi alimenté avec de l'air comprimé dont il suffit de faire varier le débit pour moduler la dépression.

Enfin, au lieu de fixer les lames rigidement au support, il serait possible d'articuler au moins l'un des éléments de préhension sur le support et de produire l'ouverture de la pince par l'effet de rappel élastique, soit du soufflet, soit d'un ressort intercalé entre les éléments de préhension.

## Revendications

1. Pince de préhension pour la transplantation de plants en mottes en horticulture, comprenant au moins deux éléments de préhension (1, 2) opposés montés en porte-à-faux sur un support (3), et des moyens de manoeuvre à fluide (5) pour agir sur les éléments de préhension (1, 2) en vue de rapprocher et d'écarter leurs extrémités libres, caractérisée par le fait que les moyens de manoeuvre comprennent un actionneur à dépression (5) disposé entre et agissant directement sur les éléments de préhension (1, 2), entre l'emplacement de montage de ces derniers sur le support (5) et leurs extrémités libres, de telle manière que lorsqu'il est mis sous dépression, il agisse sur les éléments de préhension (1, 2) dans le sens d'un rapprochement des extrémités libres des éléments de préhension à l'encontre d'un effet de rappel élastique, en vue de la fermeture de la pince pour saisir un plant, et lorsqu'il n'est pas sous dépression, il permette aux extrémités libres des éléments de préhension (1, 2) de s'écarter par effet de rappel élastique, en vue de l'ouverture de la pince pour relâcher le plant.

2. Pince suivant la revendication 1, caractérisée par le fait que l'actionneur (5) présente la forme d'un soufflet (7).

3. Pince suivant la revendication 2, caractérisée par le fait que le soufflet est élastique et, par son élasticité, participe au moins à l'ouverture de la pince.

4. Pince suivant la revendication 2 ou 3, caractérisée par le fait que l'actionneur (5) comprend deux couvercles (8, 11) fixés aux éléments de préhension (1, 2) et que le soufflet (7) est fixé auxdits couvercles.

5. Pince suivant la revendication 4, caractérisée par le fait que le soufflet (7) est fixé par collage auxdits couvercles (8, 11).

6. Pince suivant la revendication 4, caractérisée par le fait que le soufflet (7) est fixé par "boutonnage" auxdits couvercles (8, 11).

7. Pince suivant l'une quelconque des revendications précédentes, caractérisée par le fait qu'elle comprend un ressort qui est disposé entre les éléments de préhension et qui, par son élasticité, participe au moins à l'ouverture de la pince.

8. Pince suivant l'une quelconque des revendications précédentes, caractérisée par le fait qu'au moins l'un des éléments de préhension (1, 2) est élastique en flexion, est fixé rigidement au support (3) et, par son élasticité, participe au moins à l'ouverture de la pince.

9. Pince suivant l'une quelconque des revendications précédentes, caractérisée par le fait que la dépression pour l'actionneur est produite à l'aide d'un venturi alimenté en air comprimé.

10. Pince suivant la revendication 9, caractérisée par le fait que le débit d'alimentation en air comprimé du venturi est variable en vue de la modulation de l'effet de serrage de la pince.

## Claims

1. Gripper for transplanting plants with root balls in horticulture, comprising at least two opposed gripper elements (1, 2) mounted in cantilever fashion on a support (3), and fluid-actuated operating means (5) for acting on the gripper elements (1, 2) with a view to bringing together and parting their free ends, characterized in that the operating means comprise a vacuum actuator (5) arranged between and acting directly on the gripper elements (1, 2), between the point where these are mounted on the support (5) and their free ends, in such a way that when it is evacuated, it acts on the gripper elements (1, 2) in the direction of bringing the free ends of the gripper elements closer together against the action of an elastic-return effect, with a view to closing the gripper in order to grip a plant, and when it is not evacuated, it allows the free ends of the gripper elements (1, 2) to part by an elastic-return effect, with a view to opening the gripper in order to release the plant.

2. Gripper according to Claim 1, characterized in that the actuator (5) is in the form of a bellows (7).

3. Gripper according to Claim 2, characterized in that the bellows is elastic and, through its elasticity, at least plays a part in opening the gripper.

4. Gripper according to Claim 2 or 3, characterized in that the actuator (5) comprises two cover plates (8, 11) fixed to the gripper elements (1, 2) and that the bellows (7) is fixed to the said cover plates.

5. Gripper according to Claim 4, characterized in that the bellows (7) is fixed to the said cover plates (8, 11) by bonding.

6. Gripper according to Claim 4, characterized in that the bellows (7) is fixed to the said cover plates (8, 11) by "buttoning".

7. Gripper according to any one of the preceding claims, characterized in that it comprises a spring which is placed between the gripper elements and which, through its elasticity, at least plays a part in opening the gripper.

8. Gripper according to any one of the preceding claims, characterized in that at least one of the gripper elements (1, 2) is elastic in terms of bending, is fixed rigidly to the support (3) and, through its elasticity, at least plays a part in opening the gripper.

9. Gripper according to any one of the preceding claims, characterized in that the vacuum for the actuator is produced using a venturi supplied with compressed air.

10. Gripper according to Claim 9, characterized in that the flow rate at which the venturi is supplied with compressed air can be varied with a view to changing the gripping effect of the gripper.

## Patentansprüche

1. Greifzange zum Versetzen von Ballenpflanzen im Gartenbau, mit wenigstens zwei einander gegenüberliegenden Greifelementen (1, 2), die vorragend an einem Träger (3) befestigt sind und mit fluidgesteuerten Betätigungsmitteln (5), um auf die Greifelemente (1, 2) in dem Sinne einzuwirken, dass deren freie Enden aneinander angenähert oder voneinander abgespreizt werden, dadurch gekennzeichnet, dass die Betätigungsmittel ein Unterdruckbetätigungsglied (5) aufweisen, das zwischen den Greifelementen (1, 2) und auf diese zwischen deren Befestigungsstelle an dem Träger (5) und deren freien Enden unmittelbar einwirkend angeordnet ist, derart, dass es bei Beaufschlagung mit Unterdruck, auf die Greifelemente (1, 2) im Sinne der gegenseitigen Annäherung der freien Enden der Greifelemente, entgegen der Wirkung einer elastischen Rückstellung zum Schließen der Zange zum Ergreifen einer Pflanze einwirkt und, bei fehlender Unterdruckbeaufschlagung, ein gegenseitiges Abspreizen der Greifelemente (1, 2) unter der Einwirkung der elastischen Rückstellung zum Öffnen der Zange zum Freigeben der Pflanze erlaubt.

2. Zange nach Anspruch 1, dadurch gekennzeichnet, dass das getätigungsglied (5) in Gestalt eines Balges (7) ausgebildet ist.

3. Zange nach Anspruch 2, dadurch gekennzeichnet, dass der Balg elastisch ist und durch seine Elastizität wenigstens zum Öffnen der Zange beiträgt.

4. Zange nach Anspruch 2 oder 3, dadurch gekennzeichnet, dass das Betätigungsglied (5) zwei an den Greifelementen (1, 2) befestigte Deckel (8, 11) aufweist und dass der Balg (7) an diesen befestigt ist.

5. Zange nach Anspruch 4, dadurch gekennzeichnet, dass der Balg durch Ankleben (7) an den Deckein (8, 11) befestigt ist.

6. Zange nach Anspruch 4, dadurch gekennzeichnet, dass der Balg (7) durch "Anknöpfen" an den Deckeln (8, 11) befestigt ist.

7. Zange nach einem der vorhergehenden Ansprüche, dadurch gekennzeichnet, dass sie eine zwischen den Greifelementen angeordnete Feder aufweist und dass diese mit ihrer Elastizität wenigstens zum Öffnen der Zange beiträgt.

8. Zange nach einem der vorhergehenden Ansprüche, dadurch gekennzeichnet, dass wenigstens eines der Greifelemente (1, 2) biegeelastisch ist und starr an dem Träger (3) befestigt ist und mit seiner Elastizität wenigstens zum Öffnen der Zange beiträgt.

9. Zange nach einem der vorhergehenden Ansprüche, dadurch gekennzeichnet, dass der Unterdruck für das Betätigungsglied mit Hilfe eines mit Druckluft beaufschlagten Venturi-Rohres erzeugt ist.

10. Zange nach Anspruch 9, dadurch gekennzeichnet, dass die Druckluftbeaufschlagung des Venturi-Rohres zum Zwecke einer Beeinflussung der Klemmwirkung der Zange veränderlich ist.
